(19) **Europäisches Patentamt / European Patent Office / Office européen des brevets**

(11) **EP 3 471 280 B1**

(12) **FASCICULE DE BREVET EUROPEEN**

(45) Date de publication et mention
de la délivrance du brevet:
**11.08.2021 Bulletin 2021/32**

(51) Int Cl.:
***H04B 1/7163*** *(2011.01)*

(21) Numéro de dépôt: **18199252.0**

(22) Date de dépôt: **09.10.2018**

(54) **MÉTHODE DE DÉTERMINATION DE COMPOSANTES MULTI-TRAJETS D'UN CANAL UWB IMPULSIONNEL**

METHODE ZUR BESTIMMUNG DER MEHRWEGKOMPONENTEN EINES IMPULSGESTEUERTEN UWB-KANALS

METHOD FOR DETERMINING MULTIPATH COMPONENTS OF A PULSE-BASED UWB CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.10.2017 FR 1759611**

(43) Date de publication de la demande:
**17.04.2019 Bulletin 2019/16**

(73) Titulaire: **Commissariat à l'énergie atomique et aux énergies alternatives**
**75015 Paris (FR)**

(72) Inventeurs:
• **MACERAUDI, Jimmy**
  **13120 GARDANNE (FR)**
• **DEHMAS, François**
  **38450 VIF (FR)**
• **DENIS, Benoît**
  **38000 GRENOBLE (FR)**

(74) Mandataire: **Brevalex**
**56, Boulevard de l'Embouchure**
**B.P. 27519**
**31075 Toulouse Cedex 2 (FR)**

(56) Documents cités:
**EP-A1- 1 580 901          WO-A1-2015/055522**
**WO-A2-2008/156909      FR-A1- 2 996 969**

**Description**

**DOMAINE TECHNIQUE**

La présente invention concerne de manière générale le domaine des systèmes émission/réception de type UWB (*Ultra Wide Band*) impulsionnel ou IR-UWB (*Impulse Response UWB*). Elle trouve notamment son application dans le domaine du positionnement par balises IR-UWB et plus particulièrement pour le positionnement en intérieur (*indoor positioning*).

**ÉTAT DE LA TECHNIQUE ANTÉRIEURE**

La technique de transmission de type IR-UWB est bien connue de l'état de la technique, que ce soit pour des systèmes de télécommunications (par exemple au standard IEEE 802.15.4a ou IEEE 802.15.16) ou des systèmes de géolocalisation, la très faible durée des impulsions permettant d'obtenir une résolution de positionnement élevée.

Un des facteurs limitatifs des systèmes de positionnements UWB, particulièrement présent en environnement indoor, est la présence de trajets multiples de propagation, encore dénommés composantes multi-trajets ou MPCs.

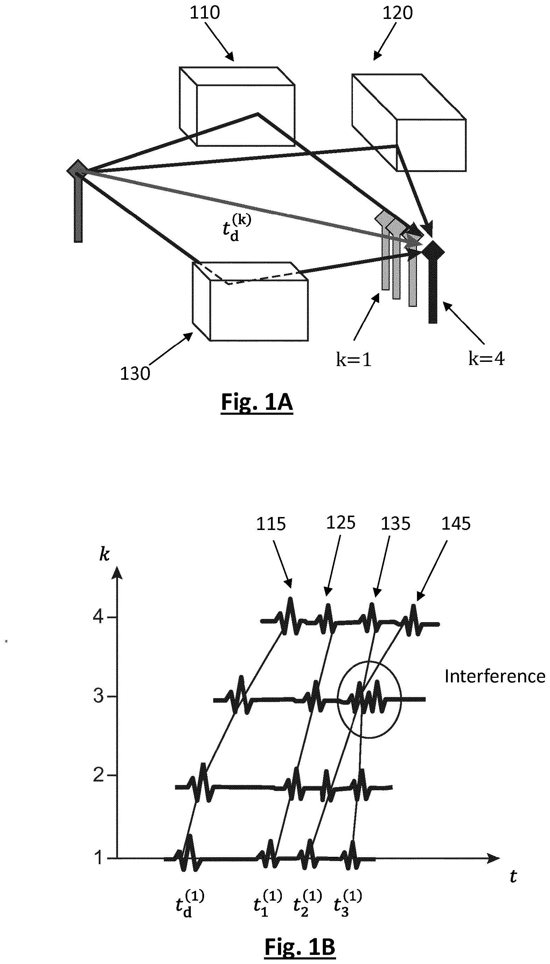

La Fig. 1A illustre la présence de composantes multi-trajets dans un canal de transmission entre un émetteur Tx et un récepteur Rx de type IR-UWB. Une impulsion émise par l'émetteur est réfléchie sur des objets 110, 120, 130 présents dans l'environnement, l'impulsion ainsi réfléchie arrivant en des instants $t_i^{(k)}$ $i=1,...P^{(k)}$ où $P^{(k)}$ est le nombre de composantes multi-trajets et $k$ est un indice représentant l'instance temporelle du canal de propagation (dénommée plus simplement dans la suite instance du canal de propagation) entre l'émetteur Tx et le récepteur Rx, comme précisé ci-après. L'indice k peut être conçu comme un indice temporel indexant des positions successives du récepteur par rapport à l'émetteur (récepteur mobile) ou des configurations successives de l'environnement (environnement évolutif), voire les deux (récepteur mobile et environnement évolutif). Les temps d'arrivée (ToAs) $t_i^{(k)}$, $i = 1,...,P^{(k)}$, sont tels que $t_i^{(k)} \geq t_d^{(k)}$ où $t_d^{(k)}$ correspond au chemin de propagation en ligne directe (LOS) de l'instance k du canal de propagation.

On a représenté en Fig. 1B le signal reçu par le récepteur Rx pour différentes instances du canal de propagation (ici des positions successives du récepteur). L'axe des abscisses donne l'instant de réception (encore dénommé délai) et l'axe des ordonnées l'instance du canal. Le canal (cf. Fig. 1A) est ici composé de quatre trajets, un trajet direct et trois trajets spéculaires (autrement dit ayant fait l'objet d'une simple réflexion). La composante directe (ou LOS) est désignée par 115. Les autres composantes multi-trajets sont désignées par 125, 135 et 145. On remarque qu'en fonction de l'instance du canal (ici en fonction de la position du récepteur), les différentes composantes multi-trajets sont plus ou moins retardées par rapport au trajet LOS, il en résulte que celles-ci peuvent se chevaucher partiellement ou complètement (on parle alors de collision ou d'interférence de MPCs). Le résultat d'une telle collision de MPCs dépend de leurs formes d'onde et de phases respectives et peut aboutir, par exemple en cas d'opposition de phase, à la disparition totale ou partielle de certaines MPCs dans le signal reçu, comme indiqué sur la figure pour l'instance de canal n° 3.

L'estimation de la position d'un récepteur au moyen d'un système de géolocalisation IR-UWB nécessite en général la présence d'un nombre minimal de balises émettrices (3 dans le plan et 4 dans l'espace, mais quelquefois moins en présence de parois réflectrices connues), encore appelées bases, dont les positions sont connues du récepteur. Chaque canal de propagation entre une base et le récepteur peut être de type multi-trajet de sorte que le récepteur peut recevoir un nombre important de composantes. Dans un tel cas, le récepteur peut se contenter de discriminer et exploiter les composantes LOS. Toutefois, les composantes multi-trajets peuvent être également utilisées pour estimer la position du récepteur. En effet, la présence de MPCs permet, notamment dans le cas où un trajet direct disparaît (NLOS) lorsque le récepteur se déplace, de pouvoir continuer à estimer la position du récepteur sans dégradation sensible de l'erreur d'estimation. Plus généralement, la diversité introduite par les composantes multi-trajets peut être exploitée (nombre plus important d'observables) pour estimer la position d'un récepteur mobile dans une méthode de navigation.

Une méthode de navigation indoor d'un récepteur IR-UWB, aidée par la poursuite de composantes multi-trajets, est décrite dans l'article de J. Maceraudi et al. intitulé « Multipath components tracking adapted to integrated IR-UWB receivers for improved indoor navigation » publié dans Proc. of 24th European Signal Processing Conférence (EUSIPCO), 2016, pp. 753-757. L'algorithme de poursuite fait toutefois appel à un ensemble complexe de filtres de Kalman à hypothèses multiples (MHKFs).

Une méthode d'obtention du temps d'arrivée en ligne directe (LOS) aidée par détermination de composantes multi-trajets dans un système de géolocalisation IR-UWB a été décrite dans l'article de J. Maceraudi et al. intitulé « Multipath-aided direct path ToA reconstruction for integrated UWB receivers in generalized NLoS", Proc. of 86th Vehicular Technology Conférence (VTC), Sept. 2017.

Selon cette méthode, l'évanouissement des MPCs (causé par des collisions/interférences) est en partie évité au moyen d'une opération de filtrage passe-bas (moyenne glissante) avant leur détection, appliquée sur la réponse de canal temporelle acquise par le récepteur. Ce pré-filtrage a toutefois pour inconvénient de supprimer une partie du signal utile et d'introduire une latence dans l'estimation de canal, le système devant attendre un certain nombre d'échantillons avant de pouvoir restituer une valeur filtrée.

Dans un autre domaine d'application, un récepteur de système de télécommunication IR-UWB a recours à une intégration du signal reçu dans des fenêtres temporelles pour récupérer les symboles transmis. Un tel récepteur, capable en outre d'opérer dans une pluralité de bandes possibles, a été décrit dans la demande de brevet FR-A-2 996 969. Dans un tel récepteur, il est nécessaire de déterminer les positions des fenêtres temporelles dans lesquelles se trouvent les impulsions. En présence de canal multi-trajet, il peut être utile d'utiliser un filtre en râteau (RAKE) pour sommer les contributions des composantes multi-trajets, ce qui suppose de pouvoir les déterminer et, le cas échéant, de les poursuivre lorsque le récepteur se déplace et/ou lorsque l'environnement évolue.

Dans tous les cas, que le récepteur fasse partie d'un système de géolocalisation ou d'un système de télécommunication IR-UWB, la détermination des composantes multi-trajets devra s'affranchir autant que possible des situations d'interférence mentionnées plus haut.

L'objet de la présente invention est par conséquent de proposer une méthode de détermination de composantes multi-trajets d'un canal de propagation dans un système de géolocalisation ou de système de télécommunication IR-UWB qui permette de résoudre de manière simple les différentes composantes multi-trajets même en situation d'interférence.

## EXPOSÉ DE L'INVENTION

La présente invention est définie par une méthode de détermination de composantes multi-trajets d'un canal de propagation dans un système IR-UWB comprenant un émetteur et un récepteur, selon la revendication indépendante 1. Ladite méthode est caractérisée en ce que ledit émetteur émet une pluralité d'impulsions UWB à une pluralité ($N$) de fréquences centrales distinctes et que le récepteur translate en bande de base la réponse du canal à chacune de ces impulsions, l'intègre sur des fenêtres temporelles pour fournir une pluralité d'échantillons complexes, combine les modules au carré des échantillons complexes correspondant à un même temps de vol et aux différentes fréquences centrales pour obtenir un échantillon composite à chaque temps de vol, les composantes multi-trajets du canal étant déterminées à partir des échantillons composites en des temps de vol successifs, excédant un seuil prédéterminé.

Selon un premier mode de réalisation, ladite pluralité d'impulsions est émise sous forme d'une trame d'impulsions successives, les modules au carré des échantillons complexes correspondant à une même fréquence centrale et aux différents temps de vols successifs étant stockés dans un buffer avant l'étape de combinaison.

Avantageusement, la durée de la trame est choisie inférieure au temps de cohérence du canal.

Ledit récepteur peut être par exemple un récepteur multi-bande à double quadrature.

Selon un second mode de réalisation, ladite pluralité d'impulsions aux différentes fréquences centrales est émise simultanément par l'émetteur.

Les fréquences centrales sont par exemple choisies égales à $f_c^1$=3.5 GHz, $f_c^2$ = 4 GHz, $f_c^3$ = 4.5 GHz et la largeur de bande des impulsions est prise égale à 500 MHz.

Selon un exemple d'application, lesdites composantes multi-trajets ainsi déterminées sont utilisées pour estimer la position du récepteur.

L'invention concerne encore un récepteur adapté à mettre en œuvre la méthode de détermination de composantes multi-trajets d'un canal de propagation selon le premier mode de réalisation, tel que défini dans la revendication indépendante 8.

L'invention concerne enfin un récepteur adapté à mettre en œuvre la méthode de détermination de composantes multi-trajets d'un canal de propagation selon le second mode de réalisation, tel que défini dans la revendication indépendante 9.

Les modules de réception IR-UWB peuvent être par exemple de type à double quadrature.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1A, déjà décrite, représente de manière schématique un canal de propagation multi-trajet entre un émetteur et un récepteur IR-UWB ;
La Fig. 1B, déjà décrite, représente le signal reçu par le récepteur de la Fig. 1A pour différentes positions de ce dernier ;
La Fig. 2 représente un cas d'interférence entre deux composantes multi-trajets au niveau d'un récepteur IR-UWB ;
La Fig. 3 représente de manière schématique un récepteur IR-UWB mettant en œuvre une méthode de détermination de composantes multi-trajets selon un premier mode de réalisation de l'invention ;
La Fig. 4 représente de manière schématique la structure d'un module de réception pouvant être utilisé dans le récepteur IR-UWB de la Fig. 3 ;

La Fig. 5 représente de manière schématique un récepteur IR-UWB mettant en œuvre une méthode de détermination de composantes multi-trajets selon un second mode de réalisation de l'invention ;

La Fig. 6A est un grossissement de la Fig. 2 autour du point d'apparition de l'interférence entre les deux composantes multi-trajets;

La Fig. 6B représente les mêmes composantes multi-trajets après traitement de l'interférence dans le récepteur de la Fig. 3.

## EXPOSÉ DÉTAILLÉ DE MODES DE RÉALISATION PARTICULIERS

Nous considérons dans la suite un système IR-UWB comprenant au moins un émetteur Tx et un récepteur Rx. Ce système peut être un système de télécommunication, un système de géolocalisation comme mentionné plus haut, voire un simple système de mesure de distance entre l'émetteur et le récepteur.

Nous supposerons que l'émetteur Tx est adapté à transmettre dans une pluralité de bandes de fréquence, plus précisément des impulsions UWB à une pluralité de fréquences centrales distinctes soit :

$$s_e\left(t,\omega_c\right) = A_e \cos\left(\omega_c\left(t-t_c\right)+\varphi\right)\exp\left(-\frac{\left(t-t_c\right)^2}{2T_{BW}^2}\right) \qquad (1)$$

où $A_e$ est l'amplitude de l'impulsion émise, $f_c = \dfrac{\omega_c}{2\pi}$ est la fréquence centrale de l'impulsion, pouvant prendre plusieurs valeurs $f_c^1,...,f_c^N$, $t_c$ est l'instant d'émission correspondant au centre de l'impulsion, $\varphi$ est la phase à l'émission, inconnue et modélisée comme une variable aléatoire uniformément répartie sur $[0,2\pi[$, $T_{BW}$ est une durée représentative de l'enveloppe gaussienne et inversement proportionnelle à la largeur de la bande passante BW. Pour distinguer les émissions d'impulsions aux différentes instances temporelles $k = 1,...,K$ du canal de propagation, nous introduisons la notation $s_e^{(k)}\left(t,\omega_c\right)$ pour indiquer que l'impulsion a été émise à l'instance k :

$$s_e^{(k)}\left(t,\omega_c\right) = A_e \cos\left(\omega_c\left(t-t_c^{(k)}\right)+\varphi^{(k)}\right)\exp\left(-\frac{\left(t-t_c^{(k)}\right)^2}{2T_{BW}^2}\right) \qquad (2)$$

où $t_c^{(k)}$ et $\varphi^{(k)}$ sont respectivement l'instant d'émission et la phase à l'émission relatifs à l'instance $k$ du canal.

Si l'on suppose que le canal de propagation comporte une pluralité P de composantes multi-trajets (considérée ici indépendante de k pour simplifier les notations) et que l'on prend une même origine des temps de vol (ou de manière équivalente des temps d'arrivée, les uns découlant des autres par la connaissance du temps d'émission), $t_c^{(k)}$ à chaque instance, le signal reçu par le récepteur Rx pour l'instance $k$ du canal, s'écrit :

$$s_r^{(k)}\left(t,\omega_c\right) = \sum_{i=1}^{P} A_e \alpha_i^{(k)} \cos\left(\omega_c\left(t-\tau_i^{(k)}\right)+\theta_i^{(k)}+\varphi^{(k)}\right)\exp\left(-\frac{\left(t-\tau_i^{(k)}\right)^2}{2T_{BW}^2}\right) \qquad (3)$$

où $\alpha_i^{(k)}$, $\theta_i^{(k)}$ et $\tau_i^{(k)}$ sont respectivement le coefficient d'atténuation et le déphasage introduits par le trajet associé à la MPC $i$ de l'instance temporelle de canal k.

Dans un récepteur IR-UWB multi-bande tel que celui décrit dans la demande FR-A-2 996 969, la combinaison des quatre sorties du module de réception en double-quadrature permet d'acquérir le signal dans différentes sous-bandes. Pour une sous-bande donnée, le signal est décomposé sur une base orthogonale constituée de deux sinusoïdes

$$W_{t_s} = \left[ t_s - \frac{W}{2}, t_s + \frac{W}{2} \right],$$

en quadrature à une fréquence centrale, puis intégré sur une fenêtre temporelle $W_{t_s} = \left[ t_s - \frac{W}{2}, t_s + \frac{W}{2} \right]$ de largeur W centrée sur l'instant d'échantillonnage $t_s$, pour fournir un échantillon d'intensité :

$$bin^{(k)}(t_s, \omega_c) = \left( \int_{W_{ts}} s_r^{(k)}(t, \omega_c) \cos(\omega_c t) \, dt \right)^2 + \left( \int_{W_{ts}} s_r^{(k)}(t, \omega_c) \sin(\omega_c t) \, dt \right)^2 \qquad (4)$$

où $bin^{(k)}(t_s, \omega_c)$ représente l'échantillon d'intensité obtenue par intégration sur la fenêtre temporelle $W_{t_s}$.

Si l'on étudie maintenant le cas d'une interférence entre deux composantes multi-trajets du canal (par exemple deux trajets indirects et absence de trajet direct), l'échantillon en sortie du récepteur $bin^{(k)}(t_s, \omega_c)$ peut s'exprimer sous la forme :

$$bin^{(k)}(t_s, \omega_c) = \left( A_1^{(k)} \right)^2 + \left( A_2^{(k)} \right)^2 + I^{(k)}(t_s, \omega_c) \qquad (5\text{-}1)$$

$$A_1^{(k)} = A_e \alpha_1^{(k)} \int_{W_{ts}} \exp\left( -\frac{\left( t - \tau_1^{(k)} \right)^2}{2T_{BW}^2} \right) dt, \quad A_2^{(k)} = A_e \alpha_2^{(k)} \int_{W_{ts}} \exp\left( -\frac{\left( t - \tau_2^{(k)} \right)^2}{2T_{BW}^2} \right) dt$$

avec $\qquad\qquad$ et où $I^{(k)}(t_s, \omega_c)$ est un

terme d'interférence défini par :

$$I^{(k)}(t_s, \omega_c) = 2A_1^{(k)} A_2^{(k)} \cos\left( \omega_c \left( \tau_1^{(k)} - \tau_2^{(k)} \right) - \left( \theta_1^{(k)} - \theta_2^{(k)} \right) \right) \qquad (5\text{-}2)$$

On voit que dans l'expression (5-1) les termes $(A_1^{(k)})^2$ et $(A_2^{(k)})^2$ sont les contributions respectives de la première et de la seconde composante multi-trajet en absence d'interférence et que le terme d'interférence $I^{(k)}(t_s, \omega_c)$ varie de manière sinusoïdale en fonction de l'écart de temps de vol sur les deux trajets du canal.

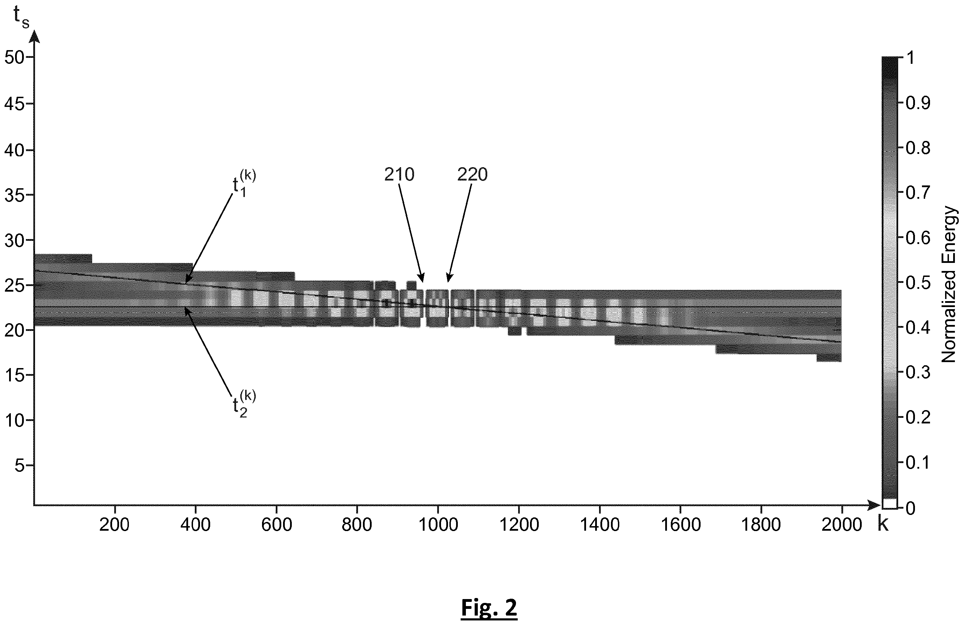

La Fig. 2 illustre le cas étudié envisagé ci-dessus (canal simplifié à deux MPCs) en donnant l'intensité du signal estimé par le récepteur IR-UWB pour des instances k successives du canal de transmission.

On a représenté en abscisses les positions successives du récepteur (instances de canal) au cours du temps et en ordonnées les instants d'échantillonnage $t_s$ (autrement dit les délais au sein de la réponse de canal). On a supposé que les temps de vol $\tau_i^{(k)}$, $i = 1,2$, dépendaient linéairement de la position du récepteur (cas d'un récepteur se déplaçant à vitesse constante). Les impulsions ont une fréquence centrale de 4 GHz et une largeur de bande de 500 MHz. Le récepteur utilise des fenêtres d'intégration d'une largeur de 2ns, décalées d'1 ns. On remarque sur la Fig. 2 que les deux composantes donnent des interférences constructives pour certaines positions du récepteur et des interférences destructives dans d'autres. En particulier, aux positions identifiées par 210 et 220, on note une absence totale de signal correspondant à une superposition exacte des impulsions reçues avec une opposition de phase entre elles. En ces positions 210 et 220, le récepteur IR-UWB ne permet pas de déterminer les composantes MPCs.

L'idée à la base de l'invention est d'utiliser des impulsions IR-UWB à différentes fréquences centrales et d'effectuer, pour une même instance temporelle de canal, une combinaison des échantillons relatifs (à un même temps de vol et) à différentes fréquences centrales. En effet, on comprend que, pour une instance temporelle de canal donnée, la situation d'interférence entre deux MPCs ne concerne qu'une seule fréquence centrale. En d'autres termes, au lieu de considérer une instance temporelle de canal à une fréquence centrale donnée, on combine les réponses de ce canal aux différentes fréquences pour s'affranchir des interférences.

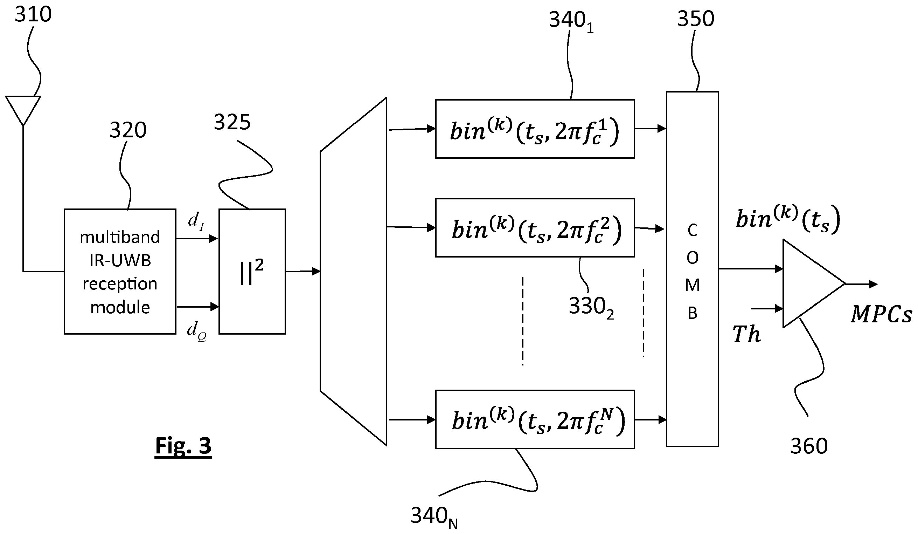

La Fig. 3 représente de manière schématique un récepteur IR-UWB mettant en œuvre une méthode de détermination des composantes multi-trajets d'un canal, selon un premier mode de réalisation de l'invention.

Plus précisément, le récepteur Rx, 300, comprend une antenne 310 et un module de réception IR-UWB multi-bande, 320. Le module de réception 320 présente une architecture à double quadrature et est avantageusement configuré pour pouvoir opérer dans une pluralité de sous-bandes, comme décrit dans la demande FR-A-2 996 969. Dans le cas présent, le module 320 est configuré pour se synchroniser sur les impulsions IR-UWB à différentes fréquences centrales $f_c^1, ..., f_c^N$ et à les translater en bande de base.

On suppose dans ce premier mode de réalisation que, pour chaque instance temporelle de canal $k$, l'émetteur Tx émet une séquence de $N$ impulsions respectivement centrées sur les fréquences centrales précitées. Le signal émis comprend au moins une trame constituée de $N$ intervalles de durée $T$, une impulsion IR-UWB de fréquence centrale $f_c^n$ étant émise pendant le $i^{\text{ème}}$ intervalle. Corrélativement, le module de réception 320 est centré sur $f_c^1$ pendant un premier intervalle de réception, sur $f_c^2$ pendant un deuxième intervalle de réception et ainsi de suite jusqu'au $N^{\text{ème}}$ intervalle de réception. On supposera également dans la suite que $NT < T_{coh}$, c'est-à-dire la durée de trame est inférieure au temps de cohérence du canal. La trame peut être elle-même se répéter à la fréquence de répétition $1/NT$.

A chaque fenêtre d'intégration, les échantillons complexes $(d_I, d_Q)$ en sortie du module de réception multi-bande 320 sont soumis à un calcul de module au carré, 325. Les échantillons d'intensité ainsi obtenus en sortie de 325 ne

$$s = 0,...,\left\lfloor \frac{T}{W} \right\rfloor,$$

sont autres que $bin^{(k)}(t_s, 2\pi f_c^n)$, $s = 0,...,\left\lfloor \frac{T}{W} \right\rfloor$ où $f_c^n$ est la fréquence centrale de la sous-bande sélectionnée dans

le récepteur, et $t_s = sW$, $s = 0,...,\left\lfloor \frac{T}{W} \right\rfloor$ sont des temps de vols successifs à partir de l'émetteur.

Ces échantillons sont démultiplexés par le démultiplexeur 330 vers les buffers $340_1,...,340_n$. Plus précisément, les échantillons obtenus pendant un intervalle de réception correspondant à la fréquence centrale $f_c^n$ sont stockés dans un buffer correspondant, $340_n$. Ainsi, après réception d'une trame pendant l'instance k des canaux aux différentes

fréquences, le buffer $340_n$ contient les échantillons $bin^{(k)}(sW, 2\pi f_c^n)$, $s = 0,...,\left\lfloor \frac{T}{W} \right\rfloor$, correspondant aux temps de vol

successifs $bin^{(k)}(t_s, 2\pi f_c^n)$, $s = 0,...,\left\lfloor \frac{T}{W} \right\rfloor$.

Les échantillons relatifs à un même temps de vol et aux différentes fréquences centrales sont ensuite combinés dans un module de combinaison 350 pour donner un échantillon composite :

$$bin^{(k)}(t_s) = \sum_{n=1}^{N} \lambda_n bin^{(k)}(t_s, 2\pi f_c^n) \tag{6}$$

où $\lambda_n$, $n = 1,...,N$ sont des coefficients de pondération prédéterminés. On pourra prendre par exemple $\lambda_n = \frac{1}{N}$ pour effectuer une simple moyenne ou $\lambda_n \propto SNR_n(t_s)$ où $SNR_n(t_s)$ est le rapport signal sur bruit à la fréquence $f_c^n$ et à l'instant

En effectuant pour chaque temps de vol $t_s = sW$, $s = 0,...,\left\lfloor \frac{T}{W} \right\rfloor$, la combinaison des échantillons $bin^{(k)}(t_s, 2\pi f_c^n)$ selon l'expression (6), on met en évidence les différentes composantes MPCs même si certaines d'entre elles disparaissent à certaines fréquences pour certaines instances de canal. Plus précisément, le comparateur 360

détecte les composantes MPCs à partir des échantillons composites $bin^{(k)}(t_s)$, $t_s = sW$, $s = 0,...,\left\lfloor \frac{T}{W} \right\rfloor$, excédant un seuil prédéterminé, $Th$.

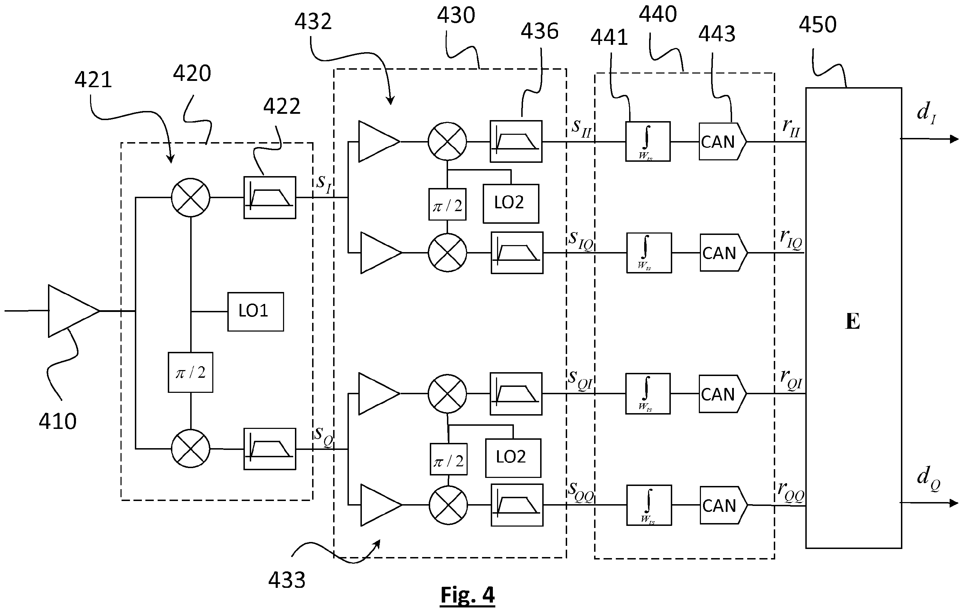

La Fig. 4 représente de manière schématique la structure du module de réception multi-bande 320 de la Fig. 3.

Ce module de réception a été décrit en détail dans la demande FR-A-2 966 969 incorporée ici par référence.

L'architecture de ce module de réception est rappelée ci-après.

Le module de réception comprend en entrée un amplificateur bas bruit, 410, suivi d'un premier étage de translation en fréquence 420. Ce premier étage comprend un premier mélangeur en quadrature 421 dont les signaux en quadrature sont générés par un premier oscillateur local $LO_1$. Ce premier étage, qui peut être shunté, permet de translater le signal en bande de base ou de le décaler à une fréquence intermédiaire. Les signaux en phase et en quadrature, $S_I$, $S_Q$, sont filtrés au moyen des filtres passe-bas 422. Les signaux ainsi filtrés passent dans un second étage en quadrature 430, comprenant un second mélangeur en quadrature 432 sur la voie en phase et un troisième mélange en quadrature 433 sur la voie en quadrature. Les signaux en quadrature sont générés par un second oscillateur local $LO_2$. Les sorties en phase et en quadrature du second mélangeur en quadrature, $S_{II}, S_{IQ}$, sont filtrées par des filtres passe-bas 436. De même, les sorties en phase et en quadrature du troisième mélangeur en quadrature, $S_{QI}, S_{QQ}$, sont filtrées par des filtres passe-bas 436. Les signaux en sortie du second étage (qui peut être également shunté) sont intégrés sur des fenêtres temporelles $W_{ts}$ successives de largeur W dans les intégrateurs 441. Les résultats d'intégration sur les différentes voies sont ensuite numérisés dans les convertisseurs analogiques/ numériques 443 et combinés dans l'étage de combinaison 450, pour fournir des échantillons complexes $(d_I, d_Q)$ :

$$\begin{pmatrix} d_I \\ d_Q \end{pmatrix} = \begin{pmatrix} \varepsilon_{II}^I & \varepsilon_{IQ}^I & \varepsilon_{QI}^I & \varepsilon_{QQ}^I \\ \varepsilon_{II}^Q & \varepsilon_{IQ}^Q & \varepsilon_{QI}^Q & \varepsilon_{QQ}^Q \end{pmatrix} \begin{pmatrix} r_{II} \\ r_{IQ} \\ r_{QI} \\ r_{QQ} \end{pmatrix} \qquad (7)$$

$$\mathbf{E} = \begin{pmatrix} \varepsilon_{II}^I & \varepsilon_{IQ}^I & \varepsilon_{QI}^I & \varepsilon_{QQ}^I \\ \varepsilon_{II}^Q & \varepsilon_{IQ}^Q & \varepsilon_{QI}^Q & \varepsilon_{QQ}^Q \end{pmatrix}$$

où les éléments de la matrice sont choisis parmi {-1,0,+1} en fonction de la sous-bande que l'on souhaite sélectionner et $r_{II}, r_{IQ}, r_{QI}, r_{QQ}$ sont les résultats d'intégration respectivement fournis par les voies $II, IQ, QI, QQ$ . Les jeux de coefficients de combinaison (éléments de la matrice $\mathbf{E}$) sont fournis à l'étage de combinaison 450 à la fréquence $1/T$, la séquence des jeux de coefficients ayant été préalablement synchronisée sur la séquence de fréquences centrales, $f_c^1,..., f_c^N$ (par exemple au moyen d'une séquence pilote).

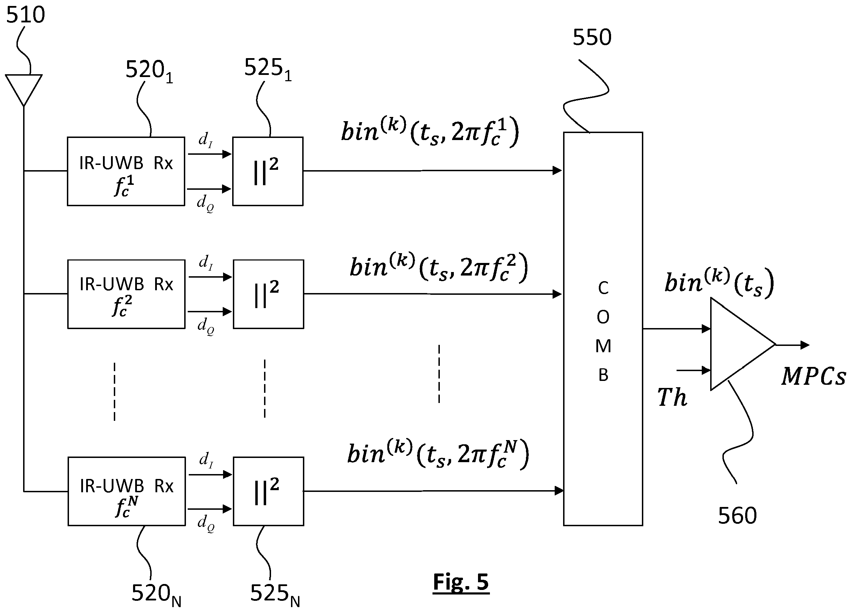

La Fig. 5 représente de manière schématique un récepteur IR-UWB mettant en œuvre une méthode de détermination des composantes multi-trajets d'un canal, selon un second mode de réalisation de l'invention.

On suppose dans ce second mode de réalisation que, pour chaque instance temporelle de canal $k$, l'émetteur Tx émet $N$ impulsions en parallèle respectivement centrées sur les fréquences centrales $f_c^1,...,f_c^N$. Cette émission en parallèle peut se répéter pendant une même instance de canal à une fréquence supérieure à $1/T_{coh}$ .

Le signal reçu par l'antenne 510 est fourni à une pluralité $N$ de récepteurs IR-UWB, $520_1,...,520_N$, opérant respectivement aux fréquences centrales $f_c^1,...,f_c^N$, par exemple des récepteurs à double quadrature comme décrit dans la demande EP-A-1 580 901, le premier étage de ces récepteurs translatant respectivement les $N$ impulsions en bande de base. Avantageusement, l'amplificateur bas bruit (LNA) en amont du premier étage de ces récepteurs pourra être mutualisé entre eux.

A chaque fenêtre d'intégration d'indice $s$ , les échantillons complexes $(d_I, d_Q)$ en sortie du module de réception multi-bande $520_n$, sont soumis à un calcul de module au carré dans le module quadratique $525_n$. Les échantillons ainsi obtenus en sortie de $525_n$ ne sont autres que $bin^{(k)}(t_s, 2\pi f_c^n)$, $s = 0,..., \left\lfloor \dfrac{T}{W} \right\rfloor$ où $t_s = sW$, $s = 0,..., \left\lfloor \dfrac{T}{W} \right\rfloor$ sont des temps de vols successifs à partir de l'émetteur.

Les échantillons $bin^{(k)}(t_s, 2\pi f_c^n)$ relatifs à un même instant d'échantillonnage $t_s$ et aux différentes fréquences centrales $f_c^1,...,f_c^N$ sont combinés au moyen d'un module de combinaison 550, identique au module de combinaison 350 précédemment décrit, effectuant une combinaison selon l'expression (6) et ce, selon les mêmes variantes. Le résultat de la combinaison est une séquence d'échantillons composites $bin^{(k)}(t_s)$, $t_s = sW$ $s = 0,..., \left\lfloor \dfrac{T}{W} \right\rfloor$.

Enfin, le comparateur 560 détecte les composantes MPCs à partir des échantillons composites excédant un seuil prédéterminé, $Th$.

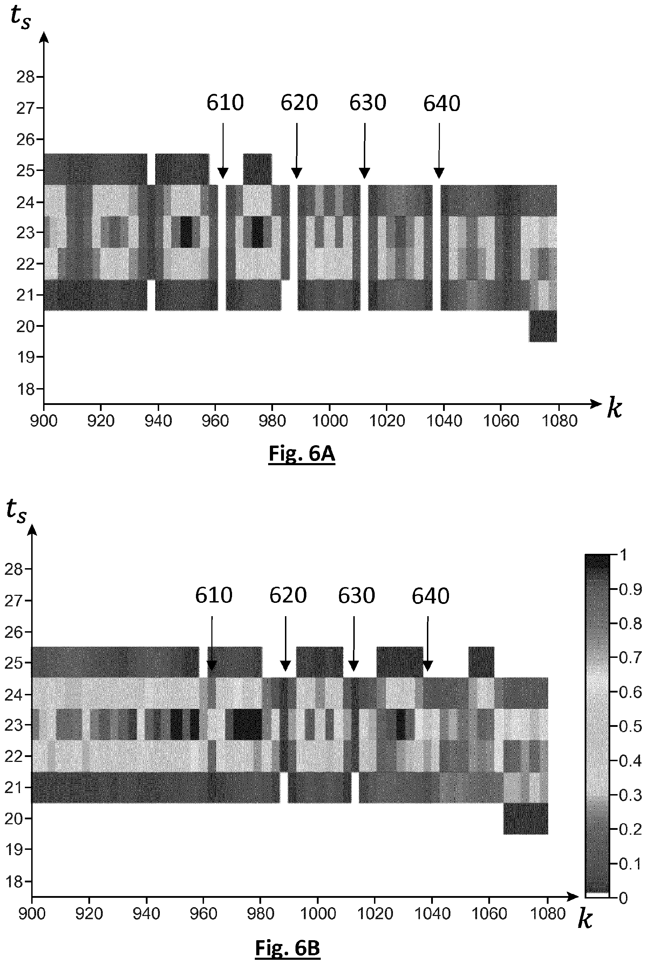

La Fig. 6A illustre une situation d'interférence entre deux trajets d'un canal IR-UWB. Elle correspond à un grossissement de la Fig. 2 autour du point d'apparition de l'interférence. On voit clairement que les deux composantes multi-trajets disparaissent dans les zones 610, 620, 630, 640 correspondant à un recouvrement temporel et une opposition de phase des deux impulsions. On rappelle que la fréquence centrale est de 4 GHz, que la largeur de bande des impulsions est de 500 MHz et que le signal reçu est intégré dans des fenêtres de 2ns de large, décalées de 1ns.

La Fig. 6B représente l'intensité du signal après traitement de l'interférence dans le récepteur de la Fig. 3. Le canal présente les mêmes deux trajets qu'en Fig. 6A. Dans cet exemple, la fréquence de l'oscillateur local, $LO_1$, du premier étage en quadrature du module de réception multi-bande a été choisie égale à 4 GHz, et la fréquence de l'oscillateur local, $LO_2$, du second étage en quadrature a été choisie égale 500 MHz. Il est alors possible, en combinant les sorties des voies en double quadrature, $II, IQ, QI, QQ$ dans l'étage de combinaison 450, de sélectionner les sous-bandes de réception centrées autour des fréquences centrales $f_c^1 = 3.5$ GHz, $f_c^2 = 4$GHz, $f_c^3 = 4.5$ GHz.

Le module de combinaison 350 du récepteur effectue ensuite la moyenne :

$$bin^{(k)}(t_s) = \frac{1}{3}\sum_{n=1}^{3} bin^{(k)}(t_s, 2\pi f_c^n) \qquad (8)$$

On remarque en Fig. 6B que les échantillons composites ne présentent plus le phénomène d'extinction dans les zones 610, 620, 630, 640 et les deux trajets du canal y sont encore identifiables par la méthode de détermination. Il est alors possible de poursuivre les deux composantes multi-trajets, y compris dans ces zones, par exemple pour aider une méthode de géolocalisation IR-UWB.

## Revendications

1. Méthode de détermination de composantes multi-trajets d'un canal de propagation dans un système IR-UWB comprenant un émetteur et un récepteur, **caractérisée en ce que** ledit émetteur émet une pluralité d'impulsions UWB à une pluralité ($N$) de fréquences centrales distinctes et que le récepteur translate en bande de base la réponse du canal à chacune de ces impulsions, l'intègre sur des fenêtres temporelles pour fournir (320 ; $520_1$-$520_N$) une pluralité d'échantillons complexes, combine (350; 550) les modules au carré des échantillons complexes correspondant à un même temps de vol et aux différentes fréquences centrales pour obtenir un échantillon composite à chaque temps de vol, les composantes multi-trajets du canal étant déterminées (350) à partir des échantillons composites en des temps de vol successifs, excédant un seuil prédéterminé.

2. Méthode de détermination de composantes multi-trajets d'un canal de propagation dans un système IR-UWB selon la revendication 1, **caractérisée en ce que** ladite pluralité d'impulsions est émise sous forme d'une trame d'impulsions successives, les modules au carré des échantillons complexes correspondant à une même fréquence centrale et aux différents temps de vols successifs étant stockés dans un buffer avant l'étape de combinaison.

3. Méthode de détermination de composantes multi-trajets d'un canal de propagation dans un système IR-UWB selon la revendication 1 ou 2, **caractérisée en ce que** la durée de la trame est choisie inférieure au temps de cohérence du canal.

4. Méthode de détermination de composantes multi-trajets d'un canal de propagation dans un système IR-UWB, selon l'une des revendications précédentes, **caractérisée en ce que** ledit récepteur (320) est un récepteur multi-bande à double quadrature.

5. Méthode de détermination de composantes multi-trajets d'un canal de propagation dans un système IR-UWB selon la revendication 1, **caractérisée en ce que** ce que ladite pluralité d'impulsions aux différentes fréquences centrales est émise simultanément par l'émetteur.

6. Méthode de détermination de composantes multi-trajets d'un canal de propagation dans un système IR-UWB, selon l'une des revendications précédentes, **caractérisée en ce que** les fréquences centrales sont $f_c^1 = 3.5$ GHz, $f_c^2 = 4$ GHz, $f_c^3 = 4.5$GHz et que la largeur de bande des impulsions est de 500 MHz.

7. Méthode de détermination de composantes multi-trajets d'un canal de propagation dans un système IR-UWB, selon l'une des revendications 2 à 4, **caractérisée en ce que** lesdites composantes multi-trajets ainsi déterminées sont utilisées pour estimer la position du récepteur.

8. Récepteur adapté à déterminer des composantes multi-trajets d'un canal de propagation, **caractérisé en ce qu'il**

comprend :

- un module de réception IR-UWB multibande (320) adapté à recevoir la réponse dudit canal à une trame d'impulsions UWB successives émises à une pluralité ($N$) de fréquences centrales distinctes, à translater en bande de base la réponse dudit canal à chacune des impulsions, à intégrer sur des fenêtres temporelles successives le signal ainsi translaté pour fournir une pluralité d'échantillons complexes correspondant à des temps de vol successifs ;
- un module de calcul (330) pour calculer les modules au carré des échantillons complexes ainsi obtenus ;
- un module de combinaison (350) pour combiner les modules au carré des échantillons correspondant à un même temps de vol et aux différentes fréquences centrales pour fournir un échantillon composite pour ledit temps de vol ;
- un module de comparaison (360) pour déterminer les composantes muti-trajets à partir des échantillons composites aux temps de vol successifs excédant un seuil prédéterminé.

**9.** Récepteur adapté à déterminer des composantes multi-trajets d'un canal de propagation, **caractérisé en ce qu'**il comprend :

- une pluralité de modules de réception IR-UWB ($520_1$,...,$520_N$) en parallèle, chaque module de réception IR-UWB étant adapté à translater en bande de base la réponse dudit canal à une fréquence centrale, parmi une pluralité de ($N$) de fréquences centrales distinctes, à intégrer sur des fenêtres temporelles successives le signal ainsi translaté pour fournir une pluralité d'échantillons complexes correspondant à des temps de vol successifs ;
- une pluralité de modules de calcul ($525_1$,...,$525_N$) pour calculer les modules au carré des échantillons complexes respectivement fournis par les modules de réception;
- un module de combinaison (550) pour combiner les modules au carré des échantillons correspondant à un même temps de vol et aux différentes fréquences centrales distinctes pour fournir un échantillon composite pour ledit temps de vol ;
- un module de comparaison (560) pour déterminer les composantes muti-trajets à partir des échantillons composites aux temps de vol successifs excédant un seuil prédéterminé.

**10.** Récepteur adapté à mettre en œuvre la méthode de détermination de composantes multi-trajets d'un canal de propagation selon la revendication 9, **caractérisé en ce que** les modules de réception IR-UWB sont à double quadrature.

## Patentansprüche

**1.** Verfahren zum Bestimmen von Mehrwegkomponenten eines Ausbreitungskanals in einem IR-UWB-System, das einen Sender und einen Empfänger enthält, **dadurch gekennzeichnet, dass** der Sender eine Vielzahl von UWB-Impulsen bei einer Vielzahl ($N$) von verschiedenen Mittenfrequenzen sendet und dass der Empfänger die Kanalantwort auf jeden dieser Impulse in das Basisband überträgt, sie über Zeitfenster integriert, um eine Vielzahl von komplexen Abtastwerten bereitzustellen ($320$; $520_1$ -$520_N$), die quadrierten Moduli der komplexen Abtastwerte, die einer gleichen Laufzeit und den verschiedenen Mittenfrequenzen entsprechen, kombiniert ($350$; $550$), um einen zusammengesetzten Abtastwert zu jeder Laufzeit zu erhalten, wobei die Mehrwegkomponenten des Kanals aus den zusammengesetzten Abtastwerten zu aufeinanderfolgenden Laufzeiten, die einen vorbestimmten Schwellenwert überschreiten, bestimmt werden ($350$).

**2.** Verfahren zum Bestimmen von Mehrwegkomponenten eines Ausbreitungskanals in einem IR-UWB-System nach Anspruch 1, **dadurch gekennzeichnet, dass** die Vielzahl von Impulsen als ein Rahmen von aufeinanderfolgenden Impulsen ausgegeben wird, wobei die quadrierten Moduli der komplexen Abtastwerte, die einer gleichen Mittenfrequenz und den verschiedenen aufeinanderfolgenden Laufzeiten entsprechen, vor dem Schritt des Kombinierens in einem Puffer gespeichert werden.

**3.** Verfahren zum Bestimmen von Mehrwegkomponenten eines Ausbreitungskanals in einem IR-UWB-System nach Anspruch 1 oder 2, **dadurch gekennzeichnet, dass** die Dauer des Rahmens so gewählt wird, dass sie kleiner ist als die Kohärenzzeit des Kanals.

**4.** Verfahren zum Bestimmen von Mehrwegkomponenten eines Ausbreitungskanals in einem IR-UWB-System nach einem der vorhergehenden Ansprüche, **dadurch gekennzeichnet, dass** der Empfänger (320) ein Dual-Quadratur-Multiband-Empfänger ist.

**5.** Verfahren zum Bestimmen von Mehrwegkomponenten eines Ausbreitungskanals in einem IR-UWB-System nach Anspruch 1, **dadurch gekennzeichnet, dass** die Vielzahl von Impulsen mit unterschiedlichen Mittenfrequenzen gleichzeitig von dem Sender ausgegeben wird.

**6.** Verfahren zum Bestimmen von Mehrwegekomponenten eines Ausbreitungskanals in einem IR-UWB-System nach einem der vorhergehenden Ansprüche, **dadurch gekennzeichnet, dass** die Mittenfrequenzen $f_c{}^1$ = 3,5 GHz, $f_c{}^2$ = 4 GHz, $f_c{}^3$ = 4,5 GHz betragen und dass die Bandbreite der Impulse 500 MHz beträgt.

**7.** Verfahren zum Bestimmen von Mehrwegkomponenten eines Ausbreitungskanals in einem IR-UWB-System nach einem der Ansprüche 2 bis 4, **dadurch gekennzeichnet, dass** die so bestimmten Mehrwegkomponenten zur Schätzung der Position des Empfängers verwendet werden.

**8.** Empfänger, der dazu geeignet ist, Mehrwegkomponenten eines Ausbreitungskanals zu bestimmen, **dadurch gekennzeichnet, dass** er enthält:

- ein Multiband-IR-UWB-Empfangsmodul (320), das dazu ausgelegt ist, die Antwort des Kanals auf einen Rahmen aufeinanderfolgender UWB-Impulse zu empfangen, die bei einer Vielzahl (*N*) verschiedener Mittenfrequenzen ausgegeben werden, die Antwort des Kanals auf jeden der Impulse in das Basisband zu übertragen, das so übertragene Signal über aufeinanderfolgende Zeitfenster zu integrieren, um eine Vielzahl komplexer Abtastwerte bereitzustellen, die aufeinanderfolgenden Laufzeiten entsprechen;
- ein Berechnungsmodul (330) zum Berechnen der quadrierten Moduli der so erhaltenen komplexen Abtastwerte;
- ein Kombinationsmodul (350) zum Kombinieren der quadrierten Moduli der Abtastwerte, die einer gleichen Laufzeit und den verschiedenen Mittenfrequenzen entsprechen, um einen zusammengesetzten Abtastwert für die genannte Laufzeit bereitzustellen; und
- ein Vergleichsmodul (360) zum Bestimmen der Mehrwegekomponenten aus den zusammengesetzten Abtastwerten zu aufeinanderfolgenden Laufzeiten, die einen vorgegebenen Schwellenwert überschreiten.

**9.** Empfänger, der dazu geeignet ist, Mehrwegkomponenten eines Ausbreitungskanals zu bestimmen, **dadurch gekennzeichnet, dass** er enthält:

- eine Vielzahl von parallel geschalteten IR-UWB-Empfangsmodulen ($520_1$, ..., $520_N$), wobei jedes IR-UWB-Empfangsmodul dazu geeignet ist, die Antwort des Kanals bei einer Mittenfrequenz aus einer Vielzahl von (*N*) verschiedenen Mittenfrequenzen in das Basisband zu übertragen, das so übertragene Signal über aufeinanderfolgende Zeitfenster zu integrieren, um eine Vielzahl von komplexen Abtastwerten bereitzustellen, die aufeinanderfolgenden Laufzeiten entsprechen;
- eine Vielzahl von Berechnungsmodulen ($525_1$, ..., $525_N$) zum Berechnen der quadrierten Moduli der komplexen Abtastwerte, die jeweils von den Empfangsmodulen bereitgestellt werden;
- ein Kombinationsmodul (550) zum Kombinieren der quadrierten Moduli der Abtastwerte, die einer gleichen Laufzeit und den verschiedenen unterschiedlichen Mittenfrequenzen entsprechen, um einen zusammengesetzten Abtastwert für die genannte Laufzeit bereitzustellen;
- ein Vergleichsmodul (560) zum Bestimmen der Mehrwegekomponenten aus den zusammengesetzten Abtastwerten zu aufeinanderfolgenden Laufzeiten, die einen vorgegebenen Schwellenwert überschreiten.

**10.** Empfänger, der dazu geeignet ist, das Verfahren zum Bestimmen von Mehrwegkomponenten eines Ausbreitungskanals nach Anspruch 9 durchzuführen, **dadurch gekennzeichnet, dass** die IR-UWB-Empfängermodule mit Dual-Quadratur ausgebildet sind.

**Claims**

**1.** A method for determining multi-path components of a propagation channel in an IR-UWB system comprising a transmitter and a receiver, **characterised in that** said transmitter transmits a plurality of UWB pulses at a plurality (N) of distinct centre frequencies and **in that** the receiver translates into baseband the response of the channel to each of these pulses, integrates it over time windows to provide (320; $520_1$-$520_N$) a plurality of complex samples, combines (350; 550) the squared modules of the complex samples corresponding to a same time of flight and to the different centre frequencies to obtain a composite sample at each time of flight, the multi-path components of the channel being determined (350) from the composite samples at successive times of flight, exceeding a predetermined threshold.

2. The method for determining multi-path components of a propagation channel in an IR-UWB system according to claim 1, **characterised in that** said plurality of pulses is transmitted as a frame of successive pulses, the squared modules of the complex samples corresponding to a same centre frequency and to the different successive times of flight being stored in a buffer before the combination step.

3. The method for determining multi-path components of a propagation channel in an IR-UWB system according to claim 1 or 2, **characterised in that** the duration of the frame is selected lower than the coherence time of the channel.

4. The method for determining multi-path components of a propagation channel in an IR-UWB system, according to one of the preceding claims, **characterised in that** said receiver (320) is a double quadrature multi-band receiver.

5. The method for determining multi-path components of a propagation channel in an IR-UWB system according to claim 1, **characterised in that** said plurality of pulses at the different centre frequencies is simultaneously transmitted by the transmitter.

6. The method for determining multi-path components of a propagation channel in an IR-UWB system, according to one of the preceding claims, **characterised in that** the centre frequencies are $f_c{}^1$=3.5GHz, $f_c{}^2$=4GHz, $f_c{}^3$=4.5GHz, and **in that** the bandwidth of pulses is 500MHz.

7. The method for determining multi-path components of a propagation channel in an IR-UWB system, according to one of claims 2 to 4, **characterised in that** said multi-path components thus determined are used to estimate the position of the receiver.

8. A receiver adapted to determine multi-path components of a propagation channel, **characterised in that** it comprises:

   - a multi-band IR-UWB reception module (320) adapted to receive the response of said channel to a frame of successive UWB pulses transmitted at a plurality ($N$) of distinct centre frequencies, translate into baseband the response of said channel to each of the pulses, integrate over successive time windows the signal thus translated to provide a plurality of complex samples corresponding to successive times of flight;
   - a calculation module (330) to calculate the squared modules of the complex samples thus obtained;
   - a combination module (350) to combine the squared modules of the samples corresponding to a same time of flight and to the different centre frequencies to provide a composite sample for said time of flight;
   - a comparison module (360) to determine the multi-path components from the composite samples at the successive times of flight exceeding a predetermined threshold.

9. A receiver adapted to determine multi-path components of a propagation channel, **characterised in that** it comprises:

   - a plurality of IR-UWB reception modules ($520_1$, ..., $520_N$) in parallel, each IR-UWB reception module being adapted to translate into baseband the response of said channel to a centre frequency, from a plurality of ($N$) distinct centre frequencies, integrate over successive time windows the signal thus translated to provide a plurality of complex samples corresponding to successive times of flight;
   - a plurality of calculation modules ($525_1$, ..., $525_N$) to calculate the squared modules of the complex samples respectively provided by the reception modules;
   - a combination module (550) to combine the squared modules of the samples corresponding to a same time of flight and to the different distinct centre frequencies to provide a composite sample for said time of flight;
   - a comparison module (560) to determine the multi-path components from the composite samples at the successive times of flight exceeding a predetermined threshold.

10. The receiver adapted to implement the method for determining multi-path components of a propagation channel according to claim 9, **characterised in that** the IR-UWB reception modules are of double quadrature.

110   120

$t_d^{(k)}$

130          k=1          k=4

**Fig. 1A**

115   125   135   145

$k$

4

3                              Interference

2

1

$t_d^{(1)}$      $t_1^{(1)}$ $t_2^{(1)}$ $t_3^{(1)}$

$t$

**Fig. 1B**

**Fig. 2**

**Fig. 3**

EP 3 471 280 B1

**Fig. 4**

EP 3 471 280 B1

**Fig. 5**

**Fig. 6A**

**Fig. 6B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2996969 A
- FR 2966969 A

- EP 1580901 A

**Littérature non-brevet citée dans la description**

- **J. MACERAUDI et al.** Multipath components tracking adapted to integrated IR-UWB receivers for improved indoor navigation. *Proc. of 24th European Signal Processing Conférence (EUSIPCO),* 2016, 753-757

- **J. MACERAUDI et al.** Multipath-aided direct path ToA reconstruction for integrated UWB receivers in generalized NLoS. *Proc. of 86th Vehicular Technology Conférence (VTC),* Septembre 2017